# EUROPEAN PATENT SPECIFICATION

(11) **EP 0 814 662 B1**
(45) Date of publication and mention of the grant of the patent: **14.07.1999**
(21) Application number: 96909640.3
(22) Date of filing: 08.03.1996
(51) Int. Cl.: A01N 43/40

(54) **MIXED HERBICIDAL COMPOSITIONS**
GEMISCHTE HERBIZIDE ZUSAMMENSETZUNGEN
COMPOSITIONS HERBICIDES MIXTES

(30) Priority: 15.03.1995 GB 9505204
(43) Date of publication of application: 07.01.1998
(73) Proprietor: Dow AgroSciences LLC, Indianapolis, Indiana 46268 (US)
(72) Inventor: FLAHIVE, Eamon, Wallingford, Oxon OX10 0DR (GB)
(74) Representative: Raynor, John
(86) International application number: US9603289
(87) International publication number: WO9628027

(56) References cited:
- EP-A- 0 064 478
- EP-A- 0 290 354
- EP-A- 0 297 305
- WO-A-94/24866
- CHEMICAL PATENTS INDEX, BASIC ABSTRACTS JOURNAL Week 8730 Derwent Publications Ltd., London, GB; AN 87-210739 XP002010018 & JP,A,62 138 404 (HODOGAYA CHEM IND) , 22 June 1987

## Description

This invention relates to the field of agricultural chemicals, and in particular to the formulation of compositions of agricultural chemicals in forms convenient for application, by conventional spray techniques. Many agricultural chemicals, particularly herbicides, are water-insoluble, and their formulation into compositions which can be applied conveniently in the field therefore generally involves the use of various adjuvants and carriers, including, in particular, organic solvents. Organic solvents are, however, increasingly thought to be environmentally unacceptable, and much effort has been applied in recent years to the production of agricultural formulations which contain no organic solvents, or at least which have only low levels of organic solvents .

Attempts have also been made in recent years to co-formulate two or more herbicidally active compounds, in order to provide compositions with a broader spread of activity that can be achieved by use of one compound alone.

US-A-4637830 is concerned with a herbicidal concentrate which addresses some of these needs, and provides a concentrate comprising a salt of a phenoxy acid herbicide, together with an alkanoate (particularly the octanoate) of ioxynil or bromoxynil. It is clear, however, from the disclosure of this reference that it is considered to be very surprising that the particular ioxynil and bromoxynil esters are compatible with the phenoxy acid salts, and indeed it is found that most herbicidal esters are not compatible with phenoxy acid salts in such a manner.

Detailed investigations subsequent to the date of US-A-4637830 have indicated that the commonly established esters of herbicides such as fluroxypyr, and haloxyfop are not compatible with herbicidal acid salts, in that it is not possible to formulate the two herbicides together in a single phase aqueous composition.

WO-94/24866 is concerned with the preparation of herbicidal compositions which are emulsifiable concentrates, concentrated aqueous emulsions, wettable powders, or dispersable granules containing fluroxypyr derivatives. The fluroxypyr is present in the form of an ester which is a liquid at 25°C. Various other herbicides may also be present, in order to produce combination products, and phenoxy acids and their esters are mentioned. There is no mention however of salts of herbicidal acids, nor any suggestion that it might be possible to provide combination products of fluroxypyr esters which are aqueous solutions, rather than emulsions or emulsifiable (i.e., non-aqueous) concentrates.

We have now determined that a number of other herbicidal esters which are not structurally similar to ioxynil and bromoxynil alkanoates will dissolve in salts of acid herbicides, in particular salts of phenoxy acid herbicides, to provide storage stable single phase compositions. The esters in question surprisingly have in common the feature that they are liquids rather than solids, at 25°C. Because the herbicidal esters in question are not structurally similar to ioxynil and bromoxynil octanoate, it would not have been predicted from US-A-4637830 that the use of these particular herbicidal esters would result in stable aqueous compositions.

Accordingly, in a first aspect of the invention, there is provided a herbicidal composition, which is a stable, homogeneous aqueous concentrate comprising a herbicidal salt, and a water-insoluble herbicide,
wherein the herbicidal salt is a sodium, potassium, ammonia, dimethylamine, diethylamine, triethylamine, monoethanolamine, diethanolamine, or triethanolamine salt of
3,6,-dichloro-2-methoxybenzoic acid (dicamba);
2,4-dichlorophenoxyacetic acid (2,4-D);
2-methyl-4-chlorophenoxyacetic acid (MCPA)
2-(2-methyl-4-chlorophenoxy)propionic acid (CMPP);
2-(2,4-dichlorophenoxy)propionic acid (2,4-DP);
4-(2-methyl-4-chlorophenoxy)butyric acid (MCPB);
4-(2,4-dichlorophenoxy)butyric acid (2,4-DB), or
((3,5,6-trichloro-2-pyridinyl)oxy)acetic acid (triclopyr)
and wherein the water-insoluble herbicide is an ester of fluroxypyr or triclopyr, which is a liquid at 25°C.

The herbicidal salt used in the concentrate of the present invention may have as its anion any of
2-methoxybenzoic acid (dicamba);
2,4-dichlorophenoxyacetic acid (2,4-D);
2-methyl-4-chlorophenoxyacetic acid (MCPA)
2-(2-methyl-4-chlorophenoxy)propionic acid (CMPP);
2-(2,4-dichlorophenoxy)propionic acid (2,4-DP);
4-(2-methyl-4-chlorophenoxy)butyric acid (MCPB);
4-(2,4-dichlorophenoxy)butyric acid (2,4-DB), or
((3,5,6-trichloro-2-pyridinyl)oxy)acetic acid (triclopyr)
The most preferred are 2,4-D, MCPA, and triclopyr.

The counter-ion may be sodium, potassium, ammonia, dimethylamine, diethylamine, monoethanolamine, triethylamine, diethanolamine, or triethanolamine, the dimethylamine, triethylamine, monoethanolamine, and potassium salts being preferred.

The quantity of the herbicidal salt employed affects the solubility of the ester in the composition. Generally, the more herbicidal salt is employed, the greater the solubility of the ester. The amount of salt may be from 1 to 99 percent, preferably from 15 to 80 percent, more preferably from 40 to 70 percent by weight of the composition.

The water-insoluble herbicide employed in the present invention is an ester of fluroxypyr or triclopyr, which is a liquid at 25°C. The ester is preferably formed with a C₆-C₁₂ alkanol, or a C₆-C₁₂ alkoxyalkanol. Liquid esters of fluroxypyr, in particular liquid esters of fluroxypyr with C₆-C₁₂ alkanols or C₆-C₁₂ alkoxyalkanols are particularly preferred. Especially preferred are the 1-butoxy-2-propyl, 1-butoxy-2-butyl, 1-(1-methoxy-2-propoxy)-2-propyl, 1-(1-butoxy-2-propoxy)-2-propyl, 1-(1-(1-methoxy-2-propoxy)-2-propoxy)-2-propyl, 1-(1-(1-butoxy-2-propoxy)-2-propoxy)-2-propyl, and 2-ethylhexyl esters, as discussed in WO-94/24866.

The esters of fluroxypyr of this invention can be prepared readily by methods well-known in the art, including the method described in EP-A-441457, which involves the preparation of the methyl or ethyl ester by alkylation of a salt of 4-amino-3,5-dichloro-6-fluoro-2-pyridinol with methyl or ethyl chloroacetate and subsequent transesterification with the desired alcohol.

The concentrate formulations of the present invention preferably contain from 1 to 50 percent by weight of the liquid ester, more preferably from 2.5 to 40 percent, most preferably from 5 to 30 percent. The ratio of the water-insoluble liquid ester to the herbicidal salt is preferably from 1:12 to 1:1, more preferably from 1:10 to 1:5, most preferably about 1:8.

The herbicidal salt component of the compositions may be a mixture of two or more herbicidal salts. Similarly, two or more water-insoluble liquid herbicidal esters may be used. When more than one herbicidal salt or more than one herbicidal ester is employed, the total amount of the salt or water-insoluble ester employed is preferably as indicated above.

A co-solvent may be employed to improve the dilution properties of the active materials. Suitable co-solvents are water-miscible materials, for example propyleneglycol ethers, propylenediethers, and pyrrolidones. Water immiscible solvents may also be used, particularly in conjunction with a water-miscible solvent (in particular, in conjunction with glycol solvents), in order to improve the solubility of the less soluble esters, particularly at low temperatures. Suitable water-immiscible solvents are those disclosed in WO-A-94/24866. The co-solvent may be present in an amount of from 1 to 20% by weight of the composition.

One or more surfactants may also be employed to improve the dilution properties. Any agriculturally acceptable surface active agent or combination of surface active agents can be employed. Examples of surface active agents that can be employed for one or more of the liquid esters of the invention include salts of alkylarylsulfonic acids (such as calcium dodecylbenzenesulfonate), alkylphenol-alkylene oxide addition products (such as nonylphenol-C₁₈-ethoxylate), alcohol-alkylene oxide addition products (such as tridecyl alcohol-C₁₆-ethoxylate), dialkyl esters of sulfosuccinic acid (such as sodium di-2-ethylhexyl sulfosuccinate), sorbitol esters (such as sorbitol oleate), polyalkylene esters of fatty acids (such as polyethylene glycol stearate), block copolymers of ethylene oxide and propylene oxide and salts of mono and dialkyl phosphate esters (such as potassium di-2-ethylhexyl phosphate). Some specific examples include alkali metal dialkyl sulfosuccinates sold under the name Anonaid™ or Empimin™, and fatty alcohol ethoxylates sold under the name Atlox™. Blends of ionic and non-ionic surfactants are generally preferred. Some specific examples include blends of calcium dodecylbenzene-sulfonate and block copolymers of ethylene oxide and propylene oxide sold under many names, including Atlox™ and Tensiofix™. An agriculturally acceptable surface active agent is a surface active agent that meets the requirements for use in agricultural products in at least one country. Particularly preferred are a nonyphenyl EO/PO block copolymer (MAKON NI-10™) and a C₁₃-C₁₅ alcohol ethoxylate (Synperonic A2™).

Surface active agents are typically present in concentrations of 1 to 20 percent, more preferably from 5 to 20 percent.

The formulations of the present invention may, optionally, contain other agriculturally acceptable adjuvants commonly used in formulated agricultural products, such as antifoam agents, compatibilizing agents, sequestering agents, neutralizing agents and buffers, corrosion inhibitors, dyes, odorants, penetration aids, spreading agents, dispersing agents, thickening agents, freeze point depressants, antimicrobial agents, crop oil, and the like.

The aqueous formulations may also contain a freeze-point depressant, such as propylene glycol, ethanol, propanol, ethylene glycol, glycerol, urea, and ammonium chloride. Propylene glycol is often preferred. Any agriculturally acceptable freeze-point depressant that does not destabilize or detract from the efficacy of the product, however, can be employed.

The aqueous compositions in accordance with the invention may be employed to produce dried herbicidal products, for example by spray-drying. Such spray-dried products may be prepared for application by simple dissolution in water. Compositions comprising the potassium salt of the herbicidal acid are particularly suitable for spray-drying.

Accordingly, the invention includes within its scope a dry herbicidal formulation obtained by spray drying a composition as referred to above.

Sprayable compositions in accordance with the invention may be prepared by diluting in water a concentrate in accordance with the invention, or by dissolving in water a spray dried composition in accordance with the invention.

The invention also includes within its scope a method of controlling or preventing the growth of weeds, which method comprises a composition according to the invention applying to the locus of the weeds.

A number of preferred embodiments of the invention are described in more detail in the following Examples.

### General Method of Preparation

Two component herbicidal compositions comprising water-insoluble herbicide esters and herbicidal salts were prepared by simple mixing until a homogeneous liquid was obtained. The process may be accelerated by elevated temperatures of up to 60°C.

The herbicidal esters used in the Examples and comparative Examples have the following melting points:

| | M.Pt. |
|---|---|
| fluroxypyr butoxypropyl ester | < 25°C |
| triclopyr butoxyethyl ester | < 25°C |
| fluroxypyr 1-butoxy-2-butyl ester | < 25°C |
| fluroxypyr 1-methoxy-2-propoxy-2-propyl ester | < 25°C |
| fluroxypyr 1-methoxy-2-propoxy-2-propoxy-2-propyl ester | < 25°C |
| haloxyfop ethoxyethyl ester (racemic) | 57°C |
| fluroxypyr 1-methyl heptyl ester | 58°C |
| fluroxypyr methyl ester | 125°C |
| 2,(4-cyano-2-flurophenoxy) phenoxypriopianate | 45°C |
| haloxyfop methyl ester (R-isomer) | 25°C |

The following compositions were prepared.

### Examples

In the following Examples, "wet basis" indicates the amounts of the various ingredients on the basis of the various commercial preparations (including water) used to prepare them. "Dry basis" indicates the equivalent dry weight of the same components. The term DMA indicates the dimethylamine salt.

| Example 1 | wet basis | dry basis |
|---|---|---|
| fluroxypyr butoxypropyl ester | 116 g/L | 116 g/L |
| 2,4-D concentrate (Commercial name DMA-6) | 810 g/L | 542 g/L |
| Water | to 1L | 506 g/L |

| Example 2 | wet basis | dry basis |
|---|---|---|
| fluroxypyr butoxypropyl ester | 116 g/L | 116 g/L |
| 2,4-D concentrate (Commercial name DMA-6) | 810 g/L | 542 g/L |
| glycol ether (Dowanol PnB) | 116 | 116 g/L |
| Water | to 1L | 390 g/L |

| Example 3 | | |
|---|---|---|
| fluroxypyr butoxypropyl ester | 116 g/L | 116 g/L |
| 2,4-D concentrate (Commercial name DMA-6) | 810 g/L | 542 g/L |
| Dowanol PnB | 116 g/L | 116 g/L |
| Surfactant MAKON NI-10 | 35 g/L | 35 g/L |
| Surfactant Synperonic A2 | 35 g/L | 35 g/L |
| Water | to 1L | 320 g/L |

| Example 4 | | |
|---|---|---|
| fluroxypyr butoxypropyl ester | 134 g/L | |
| MCPA dimethylamine salt concentrate (Commercial name MCPA 750D) | 768 g/L | 514 g/L |
| Water | Balance to 1L | |

| Example 5 | | |
|---|---|---|
| triclopyr butoxyethyl ester | 100 g/L | |
| 2,4-D concentrate (Commercial name DMA-6) | 900 g/L | 602 g/L |

| Example 6 | | |
|---|---|---|
| fluroxpyr 2-ethylhexyl | 100 g/L | |
| 2,4-D concentrate (Commercial name DMA-6) | 900 g/L | 602 g/L |

| Example 7 | | |
|---|---|---|
| fluroxypyr butoxypropyl ester | 100 g/L | |
| triclopyr triethylamine salt (commercial formulation - Garlon 3A) | 900 g/L | 400 g/L |

| Example 8 | wet basis | dry basis |
|---|---|---|
| fluroxypyr tripropylene glycol monomethyl ether | 130 g/L | |
| 2,4-D concentrate (Commercial name DMA-6) | 870 g/L | 528 g/L |

| Example 9 | | |
|---|---|---|
| triclopyr butoxyethyl ester | 25 g/L | |
| triclopyr triethylamine salt (commercial formulation - Garlon 3A) | 975 g/L | 433 g/L |

| Example 10 | | |
|---|---|---|
| fluroxypyr butoxypropyl ester | 100 g/L | |
| Mecoprop 640 D (DMA salt) | 900 g/L | 477 g/L |

| Example 11 | | |
|---|---|---|
| fluroxypyr butoxypropyl ester | 100 g/L | |
| MCPA 400K (potassium salt) | 975 g/L | 328 g/L |

| Example 12 | | |
|---|---|---|
| fluroxypyr dipropylene glycol monomethyl ether (DMA salt - Commercial name DMA-6) | 110 g/L | |
| 2,4-D concentrate | 890 g/L | 600 g/L |

| Example 13 | | |
|---|---|---|
| fluroxypyr 1-butoxy-2-butyl ester (DMA salt - Commercial name DMA-6) | 100 g/L | |
| 2,4-D concentrate | 900 g/L | 600 g/L |

All of the Examples produced clear homogeneous concentrates, which were stable at least on overnight storage.

Examples 1,2,3 and 4 were subjected to an accelerated ageing test, at a range of temperatures from -10°C to 54°C, and were stable for up to 12 months.

### Example 14

The composition of Example 11 was spray-dried to produce a fine powder. The powder could be readily redissolved in water to reconstitute the composition.

The composition of Example 3 was applied by spray to number of weed species in greenhouse trials.

The test species used in the test were:
a. 2,4-D susceptible weeds (not controlled by fluroxypyr). *Papaver rhoeas* (field poppy) and *Chenopodium album* (fathen).
b. Fluroxypyr susceptible weeds (not controlled by 2,4-D). *Galium aparine* (cleavers).
c. Resistant to both components. *Anthemis cotula* (stinking mayweed).
d. Crops: Wheat cv avalon Barley cv Igri

Plants were grown under greenhouse conditions with both cultivation and test temperatures of min. 12°C, max. 20°C. Seeds were initially sown in trays of a peat compost and transplanted (at cotyledon to one leaf growth stage), into 7 x 7 x 8 cm pots of the same peat compost. There was one plant per pot and 5 replicate pots per treatment, at treatment growth stages were:
- *Galium aparine*: 2 whorls
- *Anthemis cotula*: 7-8 leaves
- *Papaver rhoeas*: 6-8 leaves
- *Chenopodium album*: 4 leaves
- Wheat and Barley: 1-1½ leaves

The formulation of Example 3 was made up to the required doses using tap water, and applied by spray using an application volume of 200 l/ha.

Following treatment and after all foliage had dried, all plants were randomised in the greenhouse. Pots were watered by sub-pot irrigation.

Plants were assessed by visual comparison of treated plants with untreated plants. Difference was expressed as Mean Visual % Control (Table 1). Plants were also harvested by cutting at ground level and weighing the foliage. Results were expressed as mean fresh weight in grams or as mean % reduction in fresh weight. Crops were assessed by measuring crop height in cm.

Results were subjected to statistical evaluation by multiple range analysis.

The combined formulation was at least as effective as the application of the two components separately.

### Comparative Examples

Various other formulations were prepared using other herbicidal esters.

| Comparative Example 1 | | |
|---|---|---|
| | wet basis | dry basis |
| haloxyfop ethoxyethylester (racemic) | 100 g/L | |
| 2,4-D DMA | 900 g/L | 602 g/L |

| Comparative Example 2 | | |
|---|---|---|
| fluroxypyr - 1 methyl heptyl ester | 100 g/L | |
| 2,4-D DMA | 900 g/L | 602 g/L |

| Comparative Example 3 | | |
|---|---|---|
| fluroxypyr methyl ester | 80 g/L | |
| 2,4-D DMA | 920 g/L | 615 g/L |

| Comparative Example 4 | | |
|---|---|---|
| 2,(4-cyano-2-flurophenoxy) phenoxypriopianate | 100 g/L | |
| 2,4-D DMA | 900 g/L | 602 g/L |

| Comparative Example 5 | | |
|---|---|---|
| haloxyfop methyl ester | 25 g/L | |
| 2,4-D DMA | 975 g/L | |

Although some of the compositions of Comparative Examples 1 to 5 could be formulated to produce clear solutions, by heating to 60°C, none was stable on overnight storage. Typically, the compositions would crystallise, sediment, or phase separate at ambient temperature.

The composition of the present invention are particularly suitable for the treatment of broadleaf weeds for example *Brassica species, Kochia species, Boreava species, Cirsium species, Matricaria, Salsola* (Russian thistle), *Stellaria* (chickweed) and *Polygonum*, in various crops, in particular in cereal crops, for example spring and winter wheat,spring and winter barley, and rye.

The formulations of the present invention reduce the amount of or eliminate organic solvents that are environmentally undesirable.

## Claims

1. A herbicidal composition, which is a stable, homogeneous aqueous solution concentrate comprising a herbicidal salt, and a water-insoluble herbicide,
wherein the herbicidal salt is a sodium, potassium, ammonia, dimethylamine, diethylamine, triethylamine, monoethanolamine, diethanolamine, or triethanolamine salt of
3,6-dichloro-2-methoxybenzoic acid (dicamba);
2,4-dichlorophenoxyacetic acid (2,4-D);
2-methyl-4-chlorophenoxyacetic acid (MCPA)
2-(2-methyl-4-chlorophenoxy)propionic acid (CMPP);
2-(2,4-dichlorophenoxy)propionic acid (2,4-DP);
4-(2-methyl-4-chlorophenoxy)butyric acid (MCPB);
4-(2,4-dichlorophenoxy)butyric acid (2,4-DB), or
((3,5,6-trichloro-2-pyridinyl)oxy)acetic acid (triclopyr)
and wherein the water-insoluble herbicide is an ester of fluroxypyr or triclopyr, which is a liquid at 25°C.

2. A composition as claimed in Claim 1, wherein the water-insoluble herbicide is an ester of fluroxypyr or triclopyr with a C₆-C₁₂ alkanol or a C₆-C₁₂ alkoxyalkanol, or is a 1-(1-(1-butoxy-2-propoxy)-2-propoxy)-2-propyl ester.

3. A composition as claimed in any one of the preceding Claims, wherein the water-insoluble herbicide is an ester of fluroxypyr.

4. A composition as claimed in Claim 3, wherein the water-insoluble herbicide is a 1-butoxy-2-propyl, 1-butoxy-2-butyl, 1-(1-methoxy-2-propoxy)-2-propyl, 1-(1-butoxy-2-propoxy)-2-propyl, 1-(1-(1-methoxy-2-propoxy)-2-propoxy)-2-propyl, 1-(1-(1-butoxy-2-propoxy)-2-propoxy)-2-propyl, or 2-ethylhexyl ester.

5. A composition as claimed in any one of the preceding claims, wherein herbicidal salt is 2,4-D or MCPA and the water-insoluble herbicide is trichlopyr.

6. A composition as claimed in any one of the preceding claims, wherein the herbicidal salt is the dimethylamine, triethylamine, potassium, or monoethanolamine salt.

7. A composition as claimed in any one of the preceding claims, wherein the amount of the herbicidal salt is from 1 to 99 percent by weight of the composition.

8. A composition as claimed claim 5, wherein the amount of the herbicidal salt is from 15 to 80 percent by weight of the composition.

9. A composition as claimed claim 5, wherein the amount of the herbicidal salt is from 40 to 70 percent by weight of the composition.

10. A composition as claimed in any one of the preceding claims, wherein the amount of the water-insoluble herbicide is from 1 to 50 percent by weight of the composition.

11. A composition as claimed claim 8, wherein the amount of the water-insoluble herbicide is from 2.5 to 40 percent by weight of the composition.

12. A composition as claimed claim 9, wherein the amount of the water-insoluble herbicide is from 5 to 30 percent by weight of the composition.

13. A dry herbicidal formulation obtained by spray drying a composition as claimed in any of the preceding Claims.

14. A formulation as claimed in Claim 13, wherein the herbicidal salt is a potassium salt.

15. A sprayable herbicidal composition, prepared by diluting a composition as claimed in any one of Claims, 1 to 12, or by dissolving in water a composition as claimed in Claim 13 or Claim 14.

16. A method of controlling or preventing the growth of weeds, which method comprises applying to the locus of the weeds a composition as claimed in Claim 15.

## Patentansprüche

1. Herbizidzusammensetzung, welche ein stabiles, homogenes wäßriges Lösungskonzentrat ist, umfassend ein Herbizidsalz und ein wasserunlösliches Herbizid, worin das Herbizidsalz ein Natrium-, Kalium-, Ammonium-, Dimethylamin-, Diethylamin-, Triethylamin-, Monoethanolamin-, Diethanolamin- oder Triethanolaminsalz von
3,6-Dichlor-2-methoxybenzoesäure (Dicamba);
2,4-Dichlor-phenoxyessigsäure (2,4-D);
2-Methyl-4-chlorphenoxyessigsäure (MCPA)
2-(2-Methyl-4-chlorphenoxy)propionsäure (CMPP);
2-(2,4-Dichlorphenoxy)propionsäure (2,4-DP);
4-(2-Methyl-4-chlorphenoxy)butansäure (MCPB);
4-(2,4-Dichlorphenoxy)butansäure (2,4-DB),
2,4-Chlor-2-methylphenoxypropionsäure (Mecoprop), oder
((3,5,6-Trichlor-2-pyridinyl)oxy)essigsäure (Trichlopyr)
ist und worin das wasserunlösliche Herbizid ein Ester von Fluroxypyr oder Triclopyr ist, der bei 25 °C eine Flüssigkeit ist.

2. Zusammensetzung nach Anspruch 1, worin das wasserunlösliche Herbizid ein Ester von Fluroxypyr oder Triclopyr mit einem C₆-C₁₂-Alkanol oder einem C₆-C₁₂-Alkoxyalkanol ist.

3. Zusammensetzung nach einem der vorhergehenden Ansprüche, worin das wasserunlösliche Herbizid ein Ester von Fluroxypyr ist.

4. Zusammensetzung nach Anspruch 3, worin das wasserunlösliche Herbizid ein 1-Butoxy-2-propyl-, 1-Butoxy-2-butyl-, 1-(1-Methoxy-2-propoxy)-2-propyl-, 1-(1-Butoxy-2-propoxy)-2-propyl-, 1-(1-(1-Methoxy-2-propoxy)-2-propoxy)-2-propyl-, 1-(1-(1-Butoxy-2-propoxy)-2-propoxy)-2-propyl- oder 2-Ethylhexylester ist.

5. Zusammensetzung nach einem der vorhergehenden Ansprüche, worin das Herbizidsalz 2,4-D oder MCPA ist und das wasserunlösliche Herbizid Triclopyr ist.

6. Zusammensetzung nach einem der vorhergehenden Ansprüche, worin das Herbizidsalz das Dimethylamin-, Triethylamin-, Kalium- oder Ethanolaminsalz ist.

7. Zusammensetzung nach einem der vorhergehenden Ansprüche, worin der Anteil des Herbizidsalzes von 1 bis 99 Gew.-% der Zusammensetzung beträgt.

8. Zusammensetzung nach Anspruch 5, worin der Anteil des Herbizidsalzes von 15 bis 80 Gew.-% der Zusammensetzung beträgt.

9. Zusammensetzung nach Anspruch 5, worin der Anteil des Herbizidsalzes von 40 bis 70 Gew.-% der Zusammensetzung beträgt.

10. Zusammensetzung nach einem der vorhergehenden Ansprüche, worin der Anteil des wasserunlöslichen Herbizids von 1 bis 50 Gew.-% der Zusammensetzung beträgt.

11. Zusammensetzung nach Anspruch 8, worin der Anteil des wasserunlöslichen Herbizids von 2,5 bis 40 Gew.-% der Zusammensetzung beträgt.

12. Zusammensetzung nach Anspruch 9, worin der Anteil des wasserunlöslichen Herbizids von 5 bis 30 Gew.-% der Zusammensetzung beträgt.

13. Trockene Herbizidformulierung, die durch Sprühtrocknen einer Zusammensetzung nach einem der vorhergehenden Ansprüche erhalten wird.

14. Formulierung nach Anspruch 13, worin das Herbizidsalz ein Kaliumsalz ist.

15. Sprühbare Herbizidzusammensetzung, die durch Verdünnen einer Zusammensetzung nach einem der Ansprüche 1 bis 12 oder durch Auflösen einer Zusammensetzung nach Anspruch 13 oder 14 in Wasser hergestellt ist.

16. Verfahren zur Bekämpfung oder Verhinderung des Wachstums von Unkraut, welches Verfahren das Auftragen einer Zusammensetzung nach Anspruch 15 auf den Ort des Unkrauts umfaßt.

## Revendications

1. Composition herbicide qui est un concentré aqueux homogène stable, comprenant un sel herbicide et un herbicide insoluble dans l'eau, composition dans laquelle le sel herbicide est un sel de sodium, de potassium, d'ammonium, de diméthylamine, de diéthylamine, de triéthylamine, de monoéthanolamine, de diéthanolamine ou de triéthanolamine de l'acide 3,6-dichloro-2-méthoxybenzoïque (dicamba), de l'acide 2,4-dichlorophénoxyacétique (2,4-D), de l'acide 2-méthyl-4-chlorophénoxyacétique (MCPA), de l'acide 2-(2-méthyl-4-chlorophénoxy)propionique (CMPP), de l'acide 2-(2,4-dichlorophénoxy)propionique (2,4-DP), de l'acide 4-(2-méthyl-4-chlorophénoxy)butyrique (MCPB), de l'acide 4-(2,4-dichlorophénoxy)butyrique (2,4-DB), de l'acide 2-(4-chloro-2-méthylphénoxy)propionique (mecoprop) ou de l'acide ((3,5,6-trichloro-2-pyridinyl)oxy)acétique (triclopyr), et dans laquelle l'herbicide insoluble dans l'eau est un ester de fluroxypyr ou de triclopyr, qui est liquide à 25 °C.

2. Composition selon la revendication 1, dans laquelle l'herbicide insoluble dans l'eau est un ester de fluroxypyr ou de triclopyr avec un alcanol en C₆ à C₁₂ ou un alcoxyalcanol en C₆ à C₁₂.

3. Composition selon l'une quelconque des revendications précédentes, dans laquelle l'herbicide insoluble dans l'eau est un ester de fluroxypyr.

4. Composition selon la revendication 3, dans laquelle l'herbicide insoluble dans l'eau est un ester 1-butoxy-2-propylique, 1-butoxy-2-butylique, 1-(1-méthoxy-2-propoxy)-2-propylique, 1-(1-butoxy-2-propoxy)-2-propylique, 1-(1-(1-méthoxy-2-propoxy)-2-propoxy)-2-propylique, 1-(1-(1-butoxy-2-propoxy)-2-propoxy)-2-propylique ou 2-éthylhexylique.

5. Composition selon l'une quelconque des revendications précédentes, dans laquelle le sel herbicide est un sel de 2,4-D ou de MCPA et l'herbicide insoluble dans l'eau est le triclopyr.

6. Composition selon l'une quelconque des revendications précédentes, dans laquelle le sel herbicide est un sel de diméthylamine, de triéthylamine, de potassium ou d'éthanolamine.

7. Composition selon l'une quelconque des revendications précédentes, dans laquelle la proportion du sel herbicide représente 1 à 99 % en poids de la composition.

8. Composition selon la revendication 5, dans laquelle la proportion du sel herbicide représente 15 à 80 % en poids de la composition.

9. Composition selon la revendication 5, dans laquelle la proportion du sel herbicide représente 40 à 70 % en poids de la composition.

10. Composition selon l'une quelconque des revendications précédentes, dans laquelle la proportion de l'herbicide insoluble dans l'eau représente 1 à 50 % en poids de la composition.

11. Composition selon la revendication 8, dans laquelle la proportion de l'herbicide insoluble dans l'eau représente 2,5 à 40 % en poids de la composition.

12. Composition selon la revendication 9, dans laquelle la proportion de l'herbicide insoluble dans l'eau représente 5 à 30 % en poids de la composition.

13. Préparation herbicide sèche, obtenue par séchage par pulvérisation d'une composition telle que revendiquée dans l'une quelconque des revendications précédentes.

14. Préparation selon la revendication 13, dans laquelle le sel herbicide est un sel de potassium.

15. Composition herbicide pulvérisable, préparée par dilution d'une composition telle que revendiquée dans l'une quelconque des revendications 1 à 12 ou par dissolution dans l'eau d'une composition telle que revendiquée dans la revendication 13 ou 14.

16. Procédé pour maîtriser ou empêcher la croissance des mauvaises herbes, qui comprend l'application d'une composition telle que revendiquée dans la revendication 15 à l'endroit où se trouvent les mauvaises herbes.
